# EUROPÄISCHE PATENTSCHRIFT

(11) **EP 1 305 098 B1**
(45) Veröffentlichungstag und Bekanntmachung des Hinweises auf die Patenterteilung: **13.04.2005**
(21) Anmeldenummer: 01953125.0
(22) Anmeldetag: 29.06.2001
(51) Int. Cl.: B01D 21/00, B30B 9/12

(54) **ABSCHEIDEVORRICHTUNG ZUM ABSCHEIDEN VON FLÜSSIGKEIT AUS FESTSTOFFEN SOWIE DEREN VERWENDUNG**
SEPARATING DEVICE FOR SEPARATING FLUIDS FROM SOLIDS AND USE THEREOF
DISPOSITIF D'EXTRACTION PERMETTANT L'EXTRACTION DE LIQUIDE A PARTIR DE CORPS SOLIDES, ET SON UTILISATION

(30) Priorität: 04.08.2000 DE 10038079; 16.10.2000 DE 10051204; 18.11.2000 DE 10057269
(43) Veröffentlichungstag der Anmeldung: 02.05.2003
(73) Patentinhaber: Rudolf Bischof GmbH, 85386 Eching (DE)
(72) Erfinder: BISCHOF, Rudolf, 85386 Eching (DE)
(74) Vertreter: Kastel, Stefan Dipl.-Phys.
(86) Internationale Anmeldenummer: PCT/DE2001/002428
(87) Internationale Veröffentlichungsnummer: WO 2002/011853

(56) Entgegenhaltungen:
- EP-A- 0 747 546
- WO-A-98/15334
- DE-A- 19 641 600
- DE-C- 4 211 606
- US-A- 3 126 818

## Beschreibung

Die Erfindung betrifft eine Abscheidevorrichtung zum Abscheiden von Flüssigkeit aus Feststoffen nach dem Oberbegriff des beigefügten Anspruches 1.

Außerdem betrifft die Erfindung eine Verwendung einer solchen Abscheidevorrichtung. Eine solche Abscheidevorrichtung und deren Verwendung ist aus der WO 98/15334 bekannt.

Die erfindungsgemäße Abscheidevorrichtung soll vorwiegend im Bereich der mechanischen Abwasserreinigung eingesetzt werden. Bei der mechanischen Abwasserreinigung werden in vielen kommunalen Kläranlagen bereits Sieb- oder Rechenanlagen mit einer integrierten Presszone, die auch als Entwässerungszone bezeichnet wird, eingesetzt. Derartige Maschinen scheiden Feststoffe aus einem Feststoff-Flüssigkeitsgemisch ab, transportieren das Material mittels einer Förderschnecke oder einer Wendel und entwässein das ausgesonderte Material durch Pressen, um es dann zum Beispiel in einen Container abzuwerfen. Um Entsorgungskosten einzusparen, wird ein möglichst trockenes Restmaterial gewünscht.

Ein Beispiel für eine solche Abscheidevorrichtung ist aus der DE 42 11 606 C1 bekannt. Bei dieser bekannten Abscheidevorrichtung wird Feststoff, der sich an einer in einem Feststoff-Flüssigkeitsgemisch befindlichen Aussonderungsfläche ansammelt, mittels einer Schneckenfördereinrichtung mit einem Gehäuse, einer Welle und einer Förderwendel aus der Flüssigkeitsphase nach oben gefördert. Am Ende der Förderstrecke ist eine Kompaktierungszone vorgesehen, in welcher der Feststoff zur Entwässerung, d.h: zum Abscheiden von Flüssigkeit, gepresst wird. Im oberen Bereich der Schneckenfördereinrichtung geht das Gehäuse in eine Abwurfschurre über, über die der abgeschiedene Feststoff in einen Container nach unten abgeworfen wird. Vor und im Bereich der an das Gehäuse anschließenden Abwurfschurre ist die Kompaktierungszone gebildet. In der Kompaktierungszone wird der Feststoff zu einem Pfropf zusammengepresst.

Dieses Zusammenpressen wird durch eine verschiebbar verstellbare ortsfest angeordnete oder federnd nachgiebig gelagerte Gegendruckplatte verstärkt.

Darüber, wie das bei dem Pressen herausgepresste Wasser abgeführt wird, ist in der DE 4211 606 C1 nichts ausgesagt. Es ist lediglich eine Siebfläche - die Aussonderungsfläche - am Beginn der Förderstrecke zum Aussieben des Feststoffes aus dem Abwasser angesprochen.

Aus der eingangs erwähnten WO 98/15334 ist eine Abscheidevorrichtung mit den Merkmalen des Oberbegriffes des beigefügten Anspruches 1 bekannt. Die Abscheidevorrichtung dient zum Abscheiden von Flüssigkeit aus Abscheidegut, das zuvor aus einem Feststoff-Flüssigkeitsgemisch ausgesondert worden ist. Im Endbereich einer mit Gehäuse, Welle und Förderwendel versehenen Schneckenfördereinrichtung wird der durch die Förderwendel geförderte Feststoff kompaktiert. Dort ist auch eine Siebfläche zum Abfließen von ausgepresster Flüssigkeit vorhanden. Der Feststoff wird durch eine Auswurföffnung mittels einer motorisch angetriebenen Austragseinrichtung, die den Feststoff in einer zur Förderrichtung der Förderwendel senkrechten Richtung abfördert, ausgetragen. Diese Abfördereinrichtung hat eine Schaufel mit einem konischen Profil, die den Feststoff in eine zur Drehachse der Förderwendel radiale Richtung und in Umfangsrichtung hierzu drückt.
Nachteilig bei bisher bekannten Abscheidevorrichtungen der eingangs genannten Art ist, dass meist Spülwasser, d. h. Frischwasser benötigt wird, um Ablagerungen und Verkrustungen in einem Presswasser-Ablaufbereich zu vermeiden. Die Entwässerungsleistung bisher bekannter Abscheidevorrichtungen der eingangs genannten Art sind oft unbefriedigend, d. h. das abgeworfene Restmaterial ist meist noch relativ feucht und bedarf einer teueren Entsorgung. Außerdem sind an den Montageort spezielle Bedingungen gestellt, denn unterhalb der Abwurfzone müssen Container für den Abtransport des abgeschiedenen Gutes bereitgestellt werden können.

Der Erfindung liegt die Aufgabe zugrunde, eine Abscheidevorrichtung der eingangs genannten Art mit einer erhöhten Entwässerungsteistung zu schaffen.

Diese Aufgabe wird durch eine Abscheidevorrichtung mit den Merkmalen des Anspruches 1 gelöst.

Vorteilhafte Ausgestaltungen der Erfindung sind Gegenstand der Unteransprüche.

Zum Lösen der Aufgabe weist eine Abscheidevorrichtung der eingangs genannten Art eine Gegenfördereinrichtung auf, mittels welcher Feststoff entgegen der Förderrichtung der Schneckenförderrichtung zum Erhöhen des Drucks in der Kompaktierungszone und/oder am Feststoffausbringabschnitt gefördert werden kann, um so die Auspresskräfte zum Auspressen von Flüssigkeit bzw. die Ausstoßkräfte zum Ausstoßen von ausgepresstem Feststoff aus der Abscheidevorrichtung zu erhöhen. Die - beispielsweise mittels eines (Motor-) Antriebsaggregats angetriebene - Gegenfördereinrichtung erzeugt einen Gegendruck auf das in Richtung Feststoffausbringabschnitt durch die Schneckenfördereinrichtung geförderte Material. Aufgrund dieses Gegendrucks hat der geförderte Feststoff die Tendenz, radial oder tangential bezüglich der Längsachse der Welle auszuweichen.

Dabei muss die Gegenfördereinrichtung den Feststoff nicht unbedingt gegensinnig parallel zur Förderrichtung der Förderwelle zurück- oder gegenfördem. Zum Erhöhen des Pressdrucks an einem Ort, wie beispielsweise in der Kompaktierungszone und/oder am Feststoffausbringabschnitt reicht es, wenn an diesem Ort die Gegenförderrichtung mit wenigstens einer Richtungskomponente entgegen die Förderrichtung ausgerichtet ist.

Allein schon aufgrund des erhöhten Drucks ergibt sich bereits eine gegenüber bekannten Abscheidevorrichtungen verbesserte Auspress- und damit Entwässerungswirkung. Aufgrund der vorgenannten Radial- oder Tangentialkräfte lässt sich außerdem ausgepresstes Material in eine neue Richtung - tangential oder radial zur Achse der Förderschnecke - transportieren. Aufgrund dessen ist es möglich, das ausgepresste Material nicht nur nach unten bzw. schräg nach unten abzuwerfen. Das Material kann - mit entsprechendem zusätzlichen Kraftaufwand - auch seitlich, schräg nach oben oder senkrecht nach oben abgefördert werden.

Dies hat den Vorteil, dass am Montageort größere Freiheiten für die Auslegung der Abscheidevorrichtung gegeben sind, da nun nicht unbedingt in jedem Fall direkt unterhalb des oberen Endes der Schneckenfördereinrichtung ein Container abstellbar sein muss.

Aber auch aus anderen Gründen, insbesondere in Bezug auf die Entwässerungswirkung, kann es vorteilhaft sein, das Material seitlich oder nach oben auszustoßen. Durch die zum Ausstoßen benötigte Kraft wird der bereits ausgepresste Feststoff gestaut und aufgrund von Reibung und statischen Drucks nochmals komprimiert. Der Feststoff hat auch eine längere Verweilzeit innerhalb der Maschine, was das Entwässerungsergebnis zusätzlich verbessert. Es lässt sich durch die erfindungsgemäße Ausbildung also eine Nachentwässerung erreichen.

Zusätzlich lässt sich aufgrund der Gegenfördereinrichtung, auch bei ansonsten herkömmlicher Ausgestaltung, ein verbesserter Austrag des Feststoffes erreichen.

Eine Verbesserung der Entwässerung ist vorteilhafterweise zusätzlich dadurch erreichbar, dass die Welle mit der oder einer zusätzlichen Siebfläche zum Ablaufen von aus dem Feststoff abgeführter oder ausgepresster Flüssigkeit versehen ist.

Würde man das Material nämlich über einen äußeren Siebmantel entwässern, so könnte sich dieser gerade aufgrund der Presswirkung mit bereits ausgepresstem weiter außen befindlichem Feststoff zusetzen. Dies hat den Nachteil, dass weiter innen befindlicher Feststoff trotz starker Kompression nicht von seiner Flüssigkeit befreit werden kann. Die Erfindung stellt diesen erstmals entdeckten Nachteil dadurch ab, dass (lediglich oder zusätzlich) die Welle mit der bzw. einer Siebfläche versehen ist. Hierdurch lässt sich auch das Wasser bzw. die sonstige Flüssigkeit aus den inneren Feststoffbereichen entfernen.

Vorteilhafterweise ist die Welle als Hohlwelle mit Sieböffnungen und insbesondere als an einem unteren Ende offenes Rohr mit Sieböffnungen ausgebildet. Gemäß einer besonders bevorzugten Ausführungsform ist ein mit der Antriebswelle verbundenes oder diese bildendes, nach unten offenes, gelochtes Rohr im Inneren der Wendel, das man auch als Schneckeninnenrohr bezeichnen kann, vorgesehen. Das Schneckeninnenrohr ist vorzugsweise nur innerhalb des obersten Bereichs der Förderwendel, beispielsweise innerhalb der obersten zwei bis fünf Windungen vorgesehen. Die Förderwendel ist dabei mit ihren Windungen an das Schneckeninnerohr befestigt, beispielsweise geschweißt, wobei das Schneckeninnenrohr weiter vorzugsweise als Teil der Welle zur Drehkraftübertragung von einem Antriebsaggregat zur Förderwendel dient. Das Schneckeninnenrohr ermöglicht einen Abfluss des Presswassers aus dem Zentrum des sich in der Kompaktierungszone befindlichen Feststoffs. Übrigens wird der gepresste Feststoff in der Kompaktierungszone oder Presszone auch oft als "Presskuchen" bezeichnet. Das Presswasser fließt durch die untere Rohröffnung, über die Wendelhohlräume oder zwischen den Wendelausgängen und der Förderrohrinnenseite zurück in die untere Feststoffaussonderungszone, wo der Feststoff von der Flüssigkeitsphase an der Aussonderungsfläche ausgesondert wird. Das Presswasser fließt dann über die dort befindlichen Sieböffnungen weiter in den ablaufenden Flüssigkeitsstrom. Dabei werden im Presswasser beinhaltete Feststoffe direkt zurückgehalten.
Aufgrund der vorteilhafterweise mit der Siebfläche versehenen Welle kann - insbesondere bei kleineren Abscheidevorrichtungen mit geringerem Durchmesser - auf einen äußeren Siebmantel mit Spüleinrichtung verzichtet werden. Mit einem mit Sieböffnungen versehenen inneren Rohr lassen sich aber auch Entwässerungsergebnisse einer mit äußerem Siebmantel versehenen Abscheidevorrichtung verbessern.

Es sind verschiedene Gegenfördereinrichtungen denkbar, welche zum Erhöhen des Drucks auf den Presskuchen geeignet sind. Da ohnehin wegen der Siebschnecke ein Drehantrieb vorhanden ist, sind Gegenfördereinrichtungen mit Schraubenförderflächen oder Schneckenförderer oder dergleichen Axialfördereinrichtungen, die eine Förderung axial zu einer Drehachse ermöglichen, bevorzugt. Zwar könnte man die zur Gegenförderung vorgesehenen Schraubenförderflächen, die im folgenden als erste Schraubenförderflächen bezeichnet werden, auch gleichsinnig zu der Förderwendel gewendelt oder gewunden gestalten, wobei dann die Gegenförderung durch eine gegensinnige Drehung erzielt werden würde. Wenn man aber die wenigstens eine Schraubenförderfläche der Gegenfördereinrichtung gegensinnig zur Förderwendel windet, so lässt sich bei gleichsinnigem Lauf eine Gegenförderung erzielen. Insbesondere können dann die Förderwendel und die Schraubenförderfläche auf gemeinsam gleichsinnig angetriebenen Wellen und insbesondere auch auf der gleichen Welle angeordnet werden, was konstruktiv besonders einfach zu bewerkstelligen ist. Bei einer bevorzugten Ausführungsform ist eine gemeinsame Welle, derart ausgebildet, dass sie sich über die Förderwendel hinaus erstreckt. Die Förderwendel endet hierzu beispielsweise bereits vor dem Feststoffaustragsabschnitt, während sich die Welle darüber hinaus erstreckt. Die Gegenfördereinrichtung, die bevorzugt zumindest zum Teil in Förderrichtung der Förderwendel gesehen hinter dem Feststoffausbringabschnitt angeordnet ist, um über den Feststoffausbringabschnitt hinaus geförderten Feststoff zurück zu dem Feststoffausbringabschnitt zu fördern, weist vorzugsweise auf dieser Welle ein schraubwindungsförmiges oder propellerflügelförmiges Gegenförderelement - beispielsweise eine zur Gegenförderung ausgebildete Schraubförderschaufel, im folgenden Gegenförderschaufel genannt, oder ein zur Gegenförderung ausgebildetes Schneckenwendelsegment, im folgenden erstes Schneckenwendelsegment genannt - oder noch weiter bevorzugt mehrere solcher Gegenförderelemente - auf. Der Steigung der ersten Schraubenförderfläche der Gegenfördereinrichtung kann dabei gleichbleibend sein, zur Kompaktierung des zurückzufördernden Feststoffes kann aber auch vorgesehen sein, dass sich die Flankenhöhe oder axiale Schraubhöhe der ersten Schraubenförderfläche in Gegenförderrichtung gesehen reduziert.

Einige Schneckenfördereinrichtungen, die Feststoffe aus einem Feststoff-Flüssigkeits-Gemisch austragen, werden zu Reinigungszwecken oder zur Zurückführung zumindest eines Teils des Feststoffes von Zeit zu Zeit, meist kurzfristig in "Rückwärtsrichtung" betrieben, d.h. die Förderwendel wird entgegen ihrer Förderdrehrichtung gedreht. Eine Abscheidevorrichtung mit einer derartig betriebenen Schneckenfördereinrichtung wird beispielsweise in der WO93/01000 beschrieben, auf die für auch in Bezug auf besondere Ausgestaltungen der Erfindung wesentliche weitere Einzelheiten, insbesondere hinsichtlich des Aufbaus der Fördereinrichtung sowie deren Steuerung, deren Betriebsweise und Verwendung, ausdrücklich verwiesen wird. Bei einer Gegenfördereinrichtung, die an die Förderwelle oder deren Antrieb gekoppelt ist, würde eine Umkehrung der Drehrichtung eine Förderung des von der Gegenfördereinrichtung erfassten Feststoffes in Förderrichtung bewirken, was gerade bei bereits über den Feststoffaustragabschnitt hinaus gefördertem Feststoff unerwünscht ist. Eine an einen zeitweiligen Rückwärtsbetrieb der Schneckenfördereinrichtung angepasste Ausgestaltung der Erfindung sieht daher ein der Gegenfördereinrichtung zugeordnetes Förderelement vor, das auch bei Drehung der Förderwendel entgegen der Förderdrehrichtung für eine Zurückförderung von sich in Förderrichtung gesehen jenseits der Kompaktierungszone und/oder des Feststoffausbringabschnitts befindlichem Feststoff zurück zur Kompaktierungszone und/oder zum Feststoffausbringabschnitt sorgt. Es wäre zum Beispiel denkbar, eine Vorrichtung zum Umkehren der Neigung der ersten Schraubförderflächen bei Umkehrung der Drehrichtung der Abscheidevorrichtung vorzusehen. Dies wäre konstruktiv aber relativ aufwendig und wartungsintensiv. Es ist daher bevorzugt, dass die Gegenfördereinrichtung zum einen wenigstens ein mit den gegensinnig zur Förderwendel gewundenen ersten Schraubförderflächen ausgebildetes Gegenförderelement, das Feststoff bei Drehung der Welle in Förderdrehrichtung in Gegenförderrichtung fördert, und zum anderen zusätzlich wenigstens eines dieser Förderelemente aufweist. Das Förderelement könnte zum Beispiel ein mit einer zur Förderwendel gleichsinnig gewundenen zweiten Schraubenförderfläche versehenes Axialförderelement sein. In bevorzugter Ausführung ist an der Welle zum Bilden einer solchermaßen in zwei Richtungen wirksamen Gegenfördereinrichtung auf einer Wellenlängshälfte das zur Förderwendel gegensinnig gewundenes erste Schneckenwendelsegment - in Form einer Hälfte einer Schneckenwindung - als Gegenförderelement und auf der anderen Wellenlängshälfte ein zur Förderwendel gleichsinnig gewundenes zweites Schneckenwendelsegment - in Form einer spiegelbildlich zum ersten Schneckenwendelelement ausgebildeten Hälfte einer Schneckenwindung - als Förderelement derart angeordnet, dass die jeweiligen Enden aneinanderstoßend ineinander übergehen, so dass kein Material an freien Enden von Gegenförder- oder Förderelementen vorbei in Förderrichtung gesehen hinter die Gegenfördereinrichtung gelangen kann.

Ausführungsbeispiele der Erfindung werden im folgenden anhand der beigefügten Figuren näher erläutert. Darin zeigt
- Fig. 1: eine teilweise weggebrochene schematisch skizzenhafte Seitenansicht auf eine erste Ausführungsform einer an dem oberen Endbereich einer Förderschnecke, mit welcher aus zu klärenden Abwässern ausgesonderte Feststoffe ausgetragen werden, ausgebildeten Abscheidevorrichtung zum Abscheiden von Flüssigkeit aus den Feststoffen;
- Fig. 2: eine geschnittene Seitenansicht einer zweiten Ausführungsform einer solchen Abscheidevorrichtung;
- Fig. 3: einen Schnitt entlang der Linie III - III von Fig. 2;
- Fig. 4: eine Draufsicht auf eine in der Abscheidevorrichtung gemäß Fig. 2 verwendeten Förderschneckenwelle;
- Fig. 5: eine geschnittene Seitenansicht einer dritten Ausführungsform einer solchen Abscheidevorrichtung;
- Fig. 6: einen Schnitt entlang der Linie VI - VI von Fig. 5; und
- Fig. 7: eine Draufsicht auf eine in der Abscheidevorrichtung gemäß Fig. 5 verwendeten Förderschneckenwelle.

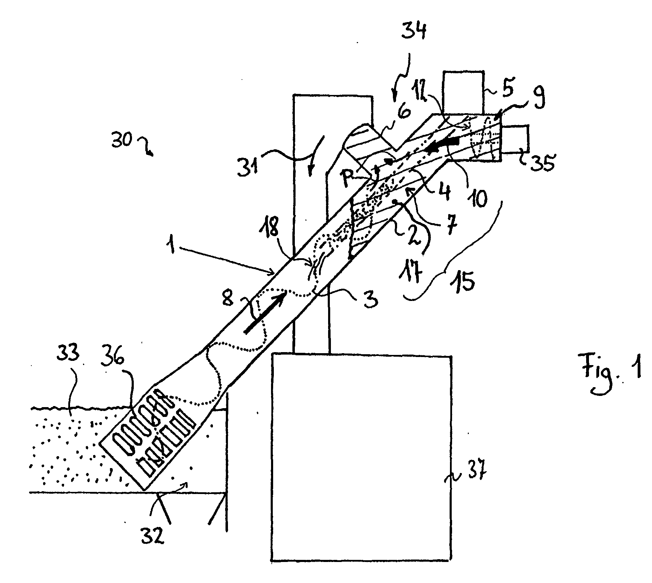

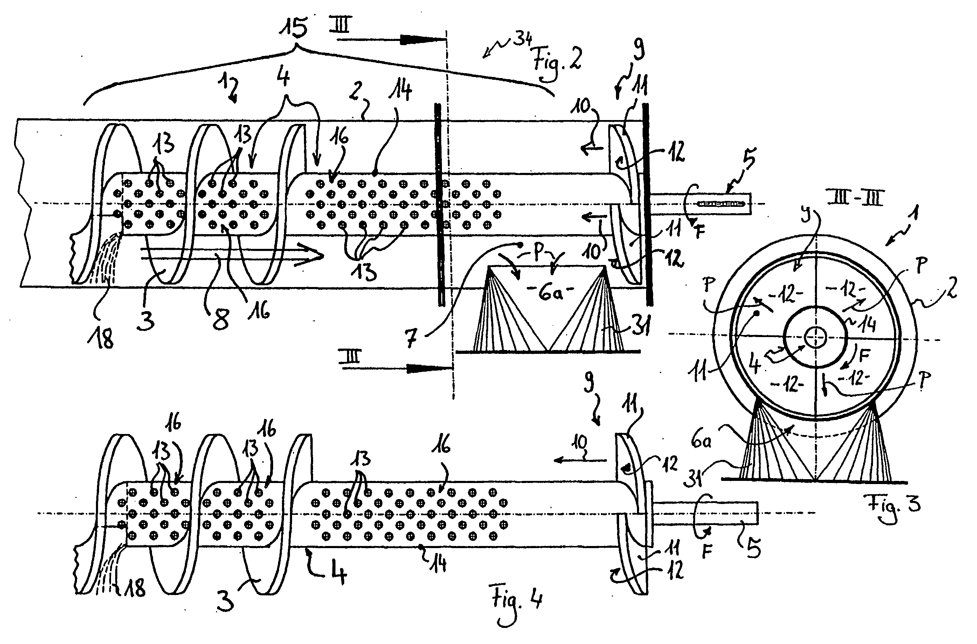

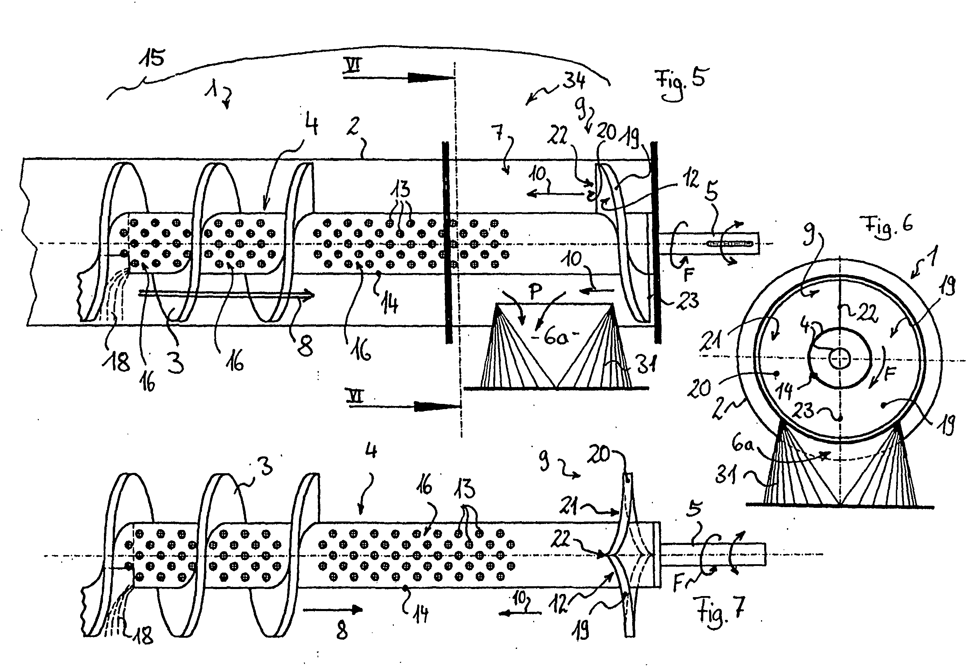

Die Figuren 1, 2, 3, 5 und 6 zeigen jeweils ganz oder teilweise eine Schneckenfördereinrichtung 1 als Teil einer Feststoff-Flüssigkeits-Trennvorrichtung 30 zum weitest möglichen Trennen von Feststoff 31 und Flüssigkeit 18, 32 eines Feststoff-Flüssigkeitsgemisches 33. Mit der Trennvorrichtung 30 sind z. B. Feststoffe aus Abwässern aussonderbar. Für den allgemeinen Aufbau solcher mit Schneckenfördereinrichtungen 1 versehener Trennvorrichtungen 30 wird ausdrücklich auf die DE 42 11 606 C1 verwiesen. Die hier beschriebene Neuerung zielt vornehmend auf die apparative Durchführung eines nach dem Aussondern des Feststoffes erfolgenden Abscheidens von Flüssigkeit aus ausgesondertem Feststoff, d.h. insbesondere auf das Entwässern von aus Abwässern gefilterten oder ausgesiebten Feststoffen ab. Hierzu ist der in den Figuren 2 und 5 gesondert gezeigte Pressund Austragbereich 34 - Endbereich der Förderstrecke - der Trennvorrichtung 30 als Abscheidevorrichtung zum Abscheiden der Flüssigkeit aus dem Feststoff ausgebildet.

Die Schneckenfördereinrichtung 1 weist ein Gehäuse 2, eine Förderwendel 3 und eine Welle 4 auf. Die Welle 4 ist an das Getriebe eines Antriebsaggregats 5 zur Drehung der Förderwendel 3 angeschlossen.

Gemäß einem in Fig. 1 dargestellten Ausführungsbeispiel ist das Gehäuse 2 mit einem Ausstoßrohr 6 versehen, durch welches Feststoff 31 aus der Abscheidevorrichtung ausstoßbar ist. Das Ausstoßrohr 6 definiert einen Feststoffausbringabschnitt 7. Das Ausstoßrohr 6 ist gemäß der in Fig. 1 dargestellten Ausführungsform seitlich und/oder nach oben wegragend am Gehäuse 2 angeordnet.

Bei den in den Figuren 2 bis 7 gezeigten Ausführungsbeispielen ist anstelle des Ausstoßrohres 6 eine den Feststoffausbringabschnitt 7 definierende sich zum Abwurf des Feststoffes 31 nach unten öffnende Austragöffnung 6a im Gehäuse 2 dargestellt.

Die Förderwendel 3 endet, wie aus den Fig. 2 und 5 ersichtlich, in Förderrichtung 8 der Schneckenfördereinrichtung 1 gesehen vor dem Feststoffausbringabschnitt 7. Weiter in Förderrichtung 8 gesehen ist eine ganz oder zum (Groß-)Teil hinter dem Feststoffausbringabschnitt 7 angeordnete Gegenfördereinrichtung 9 zum Fördern von weiter gefördertem Feststoff in eine entgegen der Förderrichtung 8 gerichtete Gegenförderrichtung 10 vorgesehen.

Gemäß dem Ausführungsbeispiel von Fig. 1 ist die Gegenfördereinrichtung 9 durch eine von der Welle 4 und der Förderwendel 3 separat ausgeführte Förderschnecke mit eigenem Antriebsaggregat 35 gebildet.

Bei den Ausführungsformen nach den Fig. 2 bis 7 umfasst die Gegenfördereinrichtung 9 dagegen wenigstens ein sich von der Welle 4 radial nach außen erstreckendes Gegenförderelement in Form einer schraubenförmig gewundenen Gegenförderschaufel 11 oder eines ersten Schneckenwendelsegments 19.

Die Gegenfördereinrichtung 9 weist jeweils zu der Förderwendel 3 gerichtete Schraubenförderflächen 12, 21 auf, die ähnlich wie die Förderwendel 3 wirkend bei Drehung der Gegenfördereinrichtung 9 das daran angreifende Material in Gegenförderrichtung 10 beaufschlagen. An den Gegenförderelementen 11, 19 sind gegensinnig zu der Schraubenwendel 3 gewendelte oder gewundene erste Schraubenförderflächen 12 vorhanden, die bei Drehung der Gegenfördereinrichtung 9 in Förderdrehrichtung F der Förderwendel 3 das daran angreifende Material in Gegenförderrichtung 10 beaufschlagen.

Die Gegenförderelemente 11, 19 sitzen fest auf der gemeinsamen Welle 4, so dass sich die Gegenförderelemente 11, 19 zusammen mit der Förderwendel 3 bei Antrieb durch das Motorantriebsaggregat 5 drehen.

In dem in den Fig. 2 bis 4 dargestellten Ausführungsbeispiel sind vier Gegenförderschaufeln 11 vorgesehen, es kann aber auch eine beliebige andere Anzahl von Gegenförderschaufeln 11 vorgesehen sein. Dahingegen ist bei der in den Fig. 5 bis 7 dargestellten Ausführungsform ein erstes Schneckenwendelsegment 19 als Gegenförderelement vorgesehen, zusammen mit einem spiegelbildlich zum ersten Schneckenwendelsegment 19 ausgebildeten und angeordneten zweiten Schneckenwendelelement 20. Das zweite Schneckenwendelsegment 20 ist mit einer zweiten Schraubenförderfläche 21 versehen, die gleichsinnig zu der Förderwendel 3 gewunden oder gewendelt ist, so dass auch bei einer Drehung der Welle 4 entgegen der Förderdrehrichtung F ein Fördern von in Förderrichtung 8 gesehen hinter dem Feststoffaustragabschnitt 7 befindlichem Feststoff in Gegenförderrichtung 10 möglich ist.

Die Welle 4 ist entweder selbst als hohles Rohr mit Sieböffnungen 13 ausgebildet - Schneckeninnenrohr 14 -, oder die Welle 4 weist in einer nicht dargestellten Ausführungsform eine innere Welle auf, die durch einen Siebmantel unter Bildung von Ablaufkanälen für Presswasser abgedeckt ist. In nicht dargestellten Ausführungsformen ist auch das Gehäuse 2 mit einem Siebmantel versehen.

Das Schneckeninnenrohr 14 erstreckt sich bei den dargestellten Ausführungsbeispielen nur innerhalb der obersten drei Windungen der Förderwendel 3, wo diese an das Schneckeninnenrohr 14 befestigt, insbesondere geschweißt, ist. Das Schneckeninnenrohr dient also zur Drehkraftübertragung vom Motorantriebsaggregat 5 (in den Fig. 2 bis 7 nur durch den Anschlusszapfen der Welle 4 an einen Getriebemotor angedeutet) zur Förderwendel 3. In nicht dargestellten Ausführungsformen erstreckt sich das Schneckeninnenrohr 14 bis in den unteren Endbereich der Schneckenfördereinrichtung 1, wo es offen endet. An dem unteren Endbereich der Schneckenfördereinrichtung 1 befindet sich im Betrieb die Flüssigkeits-Feststoffphase oder das Feststoff-Flüssigkeits-Gemisch 33, aus der bzw. dem der Feststoff 31 durch ein in diese Phase bzw. in dieses Feststoff-Flüssigkeits-Gemisch 33 eingetauchtes Aussonderungssieb 36 oder -gitter ausgesondert wird und durch die Schneckenfördereinrichtung 1 herausgefördert wird.

Im Bereich des oberen Endes der Förderwendel 3 bis hin zu der Gegenfördereinrichtung 9 ist eine Kompaktierungszone 15 ausgebildet, innerhalb welcher geförderter Feststoff zusammenpressbar ist, so dass noch darin enthaltene Flüssigkeit 18 ausgepresst wird.

Aufgrund der zuvor beschriebenen besonderen Ausbildung der Schneckenfördereinrichtung 1 ist eine beliebige Ausrichtung des anstelle oder an der Ausstoßöffnung 6a fakultativ anzuordnenden Ausstoßrohres 6 möglich. Es ist nicht nur eine seitliche Wegführung, sondem auch eine schräg oder direkt nach oben wegführende Anordnung möglich. Auch die Verwendung von flexiblen Ausstoßwegen, beispielsweise von - auch seitlich oder nach oben führenden - Ausstoßschläuchen oder Schlauchrohren ist denkbar. Auch kann ein Ausstoßrohr mit einer zusätzlichen Siebfläche versehen sein.

### Die Funktion der zuvor beschriebenen Vorrichtungen ist wie folgt:

An dem Aussonderungssieb 36 ausgesonderter Feststoff 31 wird durch die Schneckenfördereinrichtung 1, genauer durch deren Förderwendel(n) 3, hin zu deren oberen Endbereich - dem Press- und Austragbereich 34 - gefördert. Dort wird über den Feststoffausbringabschnitt 7 hinaus geförderter Feststoff durch die Gegenfördereinrichtung 9 in Gegenförderrichtung 10 zurückgefördert. Der zurück- oder gegengeförderte Feststoff drückt somit auf den weiter von der Förderwendel 3 von unten her geförderten Feststoff. Auf diese Weise wird der in der Kompaktierungszone 15 befindliche Feststoff verdichtet und zu einem Presskuchen 17 ausgepresst und entwässert.

Die ausgepresste Flüssigkeit - Presswasser 18 - entweicht durch die aufgrund der Sieböffnungen 13 als Siebfläche 16 ausgebildete Oberfläche der Welle 4 und wird durch den Hohlraum der Welle - durch das Innere des Schneckeninnenrohres 14 - nach unten zurück in das Feststoff-Flüssigkeits-Gemisch 33 geleitet. Sich eventuell im Presswasser 18 befindliche Feststoffreste werden bis zu der Feststoffaussonderungszone, in dem Feststoff aus dem Feststoff-Flüssigkeitsgemisch 33 ausgesondert wird, mitgespült, wo sie sich erneut beispielsweise in dem Aussonderungssieb 36 festsetzen und durch die Schneckenfördereinrichtung 1 ausgetragen werden.

Aufgrund der gegenläufigen Förderung in den Richtungen 10 und 8 hat das Presskuchenmaterial die Tendenz, radial nach außen auszuweichen, was durch die Pfeile P angedeutet wird. Aufgrund dieser Ausweich- oder Ausstoßkräfte P wird das Presskuchenmaterial - der ausgepresste Feststoff - durch das Ausstoßrohr 6 bzw. die Ausstoßöffnung 6a getrieben. Im Ausstoßrohr 6 wird es aufgrund von Reibung und aufgrund des statischen Drucks gestaut und somit weiter verdichtet. Der Rückstau sorgt auch für eine größere Verdichtung in der Kompaktierungszone 15, was wiederum zu einem weiteren Entwässern des Presskuchens 17 führt. Das Material wird durch das Ausstoßrohr 6 oder die Ausstoßöffnung 6a dann einem Container 37 (Fig. 1) zugeführt.

Die in den Fig. 5 bis 7 gezeigte Ausführungsform ist für einen zeitweisen Rückwärtsbetrieb der Schneckenfördereinrichtung 1 eingerichtet. Wird die Welle 4, beispielsweise zu Reinigungszwecken oder, um Feststoff in eine in der Feststoffaussonderungszone vorhandene Wascheinrichtung (nicht dargestellt) zurückzuführen, entgegen der Förderdrehrichtung F gedreht, so beaufschlagt nicht die erste Schraubenförderfläche 12 wie im Vorwärtsbetrieb, sondern die zweite Schraubenförderfläche 21 das daran angreifende Material in Gegenförderrichtung 10. Die beiden Schraubenförderflächen 12, 21 gehen an ihren jeweiligen Umfangsenden 22, 23 ineinander über, wie dies in Fig. 7 gezeigt ist. Auf diese Weise gelangt weder im Vorwärts- noch im Rückwärtsbetrieb trotz der Gegenläufigkeit der Schneckenwendelsegmente 19 und 20 Material an deren Umfangsenden vorbei hinter die Gegenfördereinrichtung 9.

### BEZUGSZEICHENLISTE

### ABSCHEIDEVORRICHTUNG ZUM ABSCHEIDEN VON FLÜSSIGKEIT AUS FESTSTOFFEN

- 1: Schneckenfördereinrichtung
- 2: Gehäuse
- 3: Förderwendel
- 4: Welle
- 5: Antriebsaggregat
- 6: Ausstoßrohr
- 6a: Ausstoßöffnung
- 7: Feststoffausbringabschnitt
- 8: Förderrichtung
- 9: Gegenfördereinrichtung
- 10: Gegenförderrichtung
- 11: Gegenförderschaufeln
- 12: erste Schraubenförderfläche
- 13: Sieböffnungen
- 14: Schneckeninnenrohr
- 15: Kompaktierungszone
- 16: Siebfläche
- 17: Presskuchen
- 18: Presswasser
- 19: erstes Schneckenwendelsegment
- 20: zweites Schneckenwendelsegment
- 21: zweite Schraubenförderfläche
- 22: vordere Umfangsenden der Schneckenwendelsegmente
- 23: hintere Umfangsenden der Schneckenwendelsegmente
- 30: Feststoff-Flüssigkeits-Trennvorrichtung
- 31: Feststoff
- 32: Flüssigkeit
- 33: Feststoff-Flüssigkeits-Gemisch, insbesondere Abwasser
- 34: Press- und Austragbereich
- 35: Antriebsaggregat der Gegenfördereinrichtung
- 36: Aussonderungssieb
- 37: Container
- F: Förderdrehrichtung
- P: Ausstoßkräfte

## Patentansprüche

1. Abscheidevorrichtung zum Abscheiden von Flüssigkeit (18) aus Feststoffen (31), insbesondere zum Abscheiden von Flüssigkeit (18) aus Abscheidegut, das zuvor aus einem Feststoff-Flüssigkeits-Gemisch (33) ausgesondert worden ist, umfassend:
- eine mit Gehäuse (2), Welle (4) und einer Förderwendel (3) versehenen Schneckenfördereinrichtung (1),
- eine Kompaktierungszone (15), in welcher durch die Schneckenfördereinrichtung (1) geförderter Feststoff zum Auspressen von Flüssigkeit (18) verdichtet wird,
- eine Siebfläche (16), insbesondere an der Kompaktierungszone (15), und
- einen Feststoffausbringabschnitt (7), an welchem ausgepresster Feststoff (17) von der Drehachse der Schneckenfördereinrichtung (1) weg geführt wird,
**gekennzeichnet durch** eine gegen die Förderwendel (3) wirkende, motorisch angetriebene Gegenfördereinrichtung (9), mittels der Feststoff motorisch angetrieben in einer zumindest mit einer Richtungskomponente der Förderrichtung (8) der Förderwendel (3) entgegengesetzten Gegenrichtung (10) förderbar ist, so dass sich in der Kompaktierungszone (15) und/oder am Feststoffausbringabschnitt (7) befindlicher Feststoff (17) **durch** Förderung der Förderwendel (3) und die entgegengesetzte Gegenförderung (10) unter Druck gesetzt wird, um so die Auspresskräfte zum Auspressen von Flüssigkeit bzw. die Ausstoßkräfte (P) zum Ausstoßen von ausgepresstem Feststoff (24) aus der Abscheidevorrichtung zu erhöhen.

2. Abscheidevorrichtung nach Anspruch 1,
**dadurch gekennzeichnet,**
**dass** die Gegenfördereinrichtung (9) wenigstens eine drehbar angeordnete erste Schraubenförderfläche (12) hat.

3. Abscheidevorrichtung nach Anspruch 2,
**dadurch gekennzeichnet,**
**dass** die wenigstens eine erste Schraubenförderfläche (12) gegensinnig zur Förderwendel (3) gewunden ist.

4. Abscheidevorrichtung nach einem der Ansprüche 2 oder 3,
**dadurch gekennzeichnet,**
**dass** die Gegenfördereinrichtung (9) wenigstens ein mit der in Förderrichtung (8) der Schneckenfördereinrichtung (1) über die Förderwendel (3) hinaus erstreckenden Welle (4) der schneckenfördereinrichtung (1) oder einer vorzugsweise konzentrisch dazu angeordneten eigenen Welle der Gegenfördereinrichtung (9) zur gemeinsamen Drehung verbundenes schraubwindungsförmiges oder propellerflügelförmiges Gegenförderelement (11, 19) aufweist, an welchem die erste Schraubenförderfläche (12) ausgebildet ist.

5. Abscheidevorrichtung nach einem der Ansprüche 1 bis 4,
**dadurch gekennzeichnet,**
**dass** die Förderwendel (3) zu Reinigungszwecken und/oder zum Zurückführen von Feststoff in eine am Beginn der Förderstrecke der Förderwendel gelegene Zone entgegen der Förderdrehrichtung (F) drehbar ist und
**dass** der Gegenfördereinrichtung (9) ein Förderelement (20, 21) zugeordnet ist, das bei Drehung der Förderwendel (3) entgegen der Förderdrehrichtung (F) sich in Förderrichtung (8) gesehen jenseits der Kompaktierungszone (15) und/oder des Feststoffausbringabschnitts (7) befindlichen Feststoff in Richtung zur Kompaktierungszone (15) und/oder zum Feststoffausbringabschnitt (7) fördert, insbesondere zurückfördert.

6. Abscheidevorrichtung nach Anspruch 5, insbesondere auch nach Anspruch 4,
**dadurch gekennzeichnet,**
**dass** die Gegenfördereinrichtung (9) eine Axialfördereinrichtung aufweist, die mit der Welle (4) der Schneckenfördereinrichtung (1) zur gemeinsamen Drehung verbunden ist, vorzugsweise als eine solche Axialfördereinrichtung ausgebildet ist, und
**dass** die Axialfördereinrichtung neben einem gegensinnig zur Förderwendel (3) derart ausgebildeten Gegenförderelement (11, 12), dass es Feststoff bei Drehung der Welle (4) in Förderdrehrichtung in Gegenförderrichtung (10) fördert, auch das Förderelement (20, 21) aufweist, das als ein zur Förderwendel (3) gleichsinniges - insbesondere schraubwindungsförmiges oder propellerflügelförmiges und mit einer zur Förderwendel (3) gleichsinnig gewundenen zweiten Schraubenförderfläche (21) versehenes - Axialförderelement (20) ausgebildet ist.

7. Abscheidevorrichtung nach einem der Ansprüche 2 bis 4 und/oder nach Anspruch 6,
**dadurch gekennzeichnet,**
**dass** die Flankenhöhe oder Schraubhöhe einer, mehrerer oder aller der Schraubenförderflächen (12) gleichbleibend ist oder sich in Gegenförderrichtung (10) gesehen reduziert.

8. Abscheidevorrichtung nach einem der Ansprüche 1 bis 7,
**dadurch gekennzeichnet,**
**dass** die Förderwendel (3) in Förderrichtung (8) gesehen vor dem Feststoffausbringabschnitt (7) endet und/oder
**dass** die Gegenfördereinnchtung (9) in Förderrichtung (8) gesehen hinter dem Feststoffausbringabschnitt (7) angeordnet ist zur Gegen- oder Zurückförderung von sich in Förderrichtung (8) gesehen jenseits der Kompaktierungszone (15) und/oder des Feststoffausbringabschnitts (7) befindlichem Feststoff hin bzw. zurück zur Kompaktierungszone (15) und/oder zum Feststoffausbringabschnitt (7).

9. Abscheidevorrichtung nach einem der voranstehenden Ansprüche,
**dadurch gekennzeichnet,**
**dass** die Welle (4) mit der Siebfläche (16) versehen ist oder zumindest ein Teil der Siebfläche (16) an der Welle (4) ausgebildet ist.

10. Abscheidevorrichtung nach einem der Ansprüche 1 bis 9,
**dadurch gekennzeichnet,**
**dass** die Welle (4) als Hohlwelle mit Sieböffnungen (13) und insbesondere als an einem unteren Ende offenes Rohr (14) ausgebildet ist.

11. Abscheidevorrichtung nach Anspruch 10,
**dadurch gekennzeichnet,**
**dass** die Sieböffnungen (13) im gesamten Bereich oder einem Teilbereich der Kompaktierungszone (15) an der Welle (4), vorzugsweise aber nicht im Bereich des Feststoffausbringabschnitts (7), ausgebildet sind.

12. Abscheidevorrichtung nach einem der Ansprüche 1 bis 11,
**dadurch gekennzeichnet,**
**dass** der Feststoffausbringabschnitt (7) ein sich mit einer tangentialen oder radialen Richtungskomponente, insbesondere in horizontaler Richtung und/oder nach oben, von der Drehachse der Förderwendel (3) weg erstreckendes Ausstoßrohr (6) aufweist, durch welches der Feststoff aufgrund des Drucks der gegensinnigen Förderungen (8, 10) hindurchgepresst wird.

13. Verwendung der Abscheidevorrichtung nach einem der Ansprüche 1 bis 12:
a) in einer Feststoff-Flüssigkeits-Trennvorrichtung (30), welche Feststoff aus einem Feststoff-Flüssigkeitsgemisch (33) aussondert, insbesondere in einem Press- und Austragbereich (34) einer solchen Trennvorrichtung (30), zum Entziehen von noch im ausgesonderten Feststoff vorhandener Flüssigkeit und/oder
b) zur Entwässerung von aus Abwässern ausgesonderten Feststoffen.

## Claims

1. Separator for separating liquid (18) from solids (31), particularly for separating liquid (18) from separated material which has previously been removed from a solid/liquid mixture (33), comprising:
• a screw conveyor device (1) provided with a housing (2), shaft (4) and a helical conveyor (3),
• a compacting zone (15) in which solids conveyed by the screw conveyor device (1) are compacted to squeeze out liquid (18),
• a screening surface (16), particularly at the compacting zone (15), and
• a solids discharge section (7) at which the squeezed out solids (17) are conveyed away by the rotation spindle of the screw conveyor device (1),
**characterised by** a motor-driven counter-conveyor (9) acting against the helical conveyor (3), by means of which the solids can be conveyed by a motor-driven action in a counter-direction (10) which is opposite to the conveying direction (8) of the helical conveyor (3), at least with one directional component, so that any solids (17) located in the compacting zone (15) and/or at the solids discharge section (7) are put under pressure by the conveying action of the helical conveyor (3) and the opposing counter-conveying (10), so as to increase the squeezing forces for squeezing out liquid or the expulsion forces (P) for expelling the squeezed-out solids (24) from the separator.

2. Separator according to claim 1, **characterised in that** the counter-conveyor (9) has at least one rotatably mounted first screw conveyor surface (12).

3. Separator according to claim 2, **characterised in that** the or each first screw conveyor surface (12) is wound in the opposite direction to the helical conveyor (3).

4. Separator according to one of claims 2 or 3, **characterised in that** the counter-conveyor (9) has at least one counter-conveying element (11, 19) on which the first screw conveyor surface (12) is formed, which is in the form of a screw thread or propeller blade and which is connected for common rotation with the shaft (4) of the screw conveying device (1) extending in the direction of conveying (8) of the screw conveying device (1) beyond the helical conveyor (3) or a shaft belonging to the counter-conveyor (9), which is preferably arranged concentrically therewith.

5. Separator according to one of claims 1 to 4, **characterised in that** the helical conveyor (3) is rotatable counter to the rotational direction of conveying (F), for cleaning purposes and/or for returning solids to a zone situated at the start of the conveying path of the helical conveyor, and **in that** associated with the counter-conveyor (9) is a conveyor element (20, 21) which, on rotation of the helical conveyor (3) counter to the rotational direction of conveying (F), conveys or more particularly returns any solids located beyond the compacting zone (15) and/or the solids discharge section (7), viewed in the direction of conveying, towards the compacting zone (15) and/or to the solids discharge section (7).

6. Separator according to claim 5, particularly also according to claim 4, **characterised in that** the counter-conveyor (9) comprises an axial conveying device which is connected for common rotation with the shaft (4) of the screw conveying device (1) and is preferably constructed as an axial conveying device of this kind, and **in that** the axial conveying device, in addition to having a counter-conveying element (11, 12) constructed to rotate in the opposite direction to the helical conveyor (3) such that it conveys solids in the contrary direction of conveying (10) when the shaft (4) rotates in the rotational direction of conveying, also comprises the conveying element (20, 21) which is constructed as an axial conveying element (20) rotating in the same direction as the helical conveyor (3) and particularly in the form of a screw thread or propeller blade and comprising a second screw conveyor surface (21) which is wound in the same direction as the helical conveyor (3).

7. Separator according to one of claims 2 to 4 and/or according to claim 6, **characterised in that** the flank height or screw height of one, several or all of the screw conveyor surfaces (12) is constant or reduces, viewed in the contrary direction of conveying (10).

8. Separator according to one of claims 1 to 7, **characterised in that** the helical conveyor (3) terminates before the solids discharge section (7), viewed in the direction of conveying (8), and/or the counter-conveyor (9) is arranged behind the solids discharge section (7), viewed in the direction of conveying (8), for counter-conveying or conveying back any solids located beyond the compacting zone (15) and/or the solids discharge section (7), viewed in the direction of conveying (8), towards or back to the compacting zone (15) and/or to the solids discharge section (7).

9. Separator according to one of the preceding claims, **characterised in that** the shaft (4) is provided with the screening surface (16) or at least part of the screening surface (16) is formed on the shaft (4).

10. Separator according to one of claims 1 to 9, **characterised in that** the shaft (4) is constructed as a hollow shaft with screening openings (13) and particularly as a tube (14) which is open at a lower end.

11. Separator according to claim 10, **characterised in that** the screening openings (13) are formed over all or part of the compacting zone (15) on the shaft (4), but preferably not in the region of the solids discharge section (7).

12. Separator according to one of claims 1 to 11, **characterised in that** the solids discharge section (7) has an expulsion tube (6) extending with a tangential or radial directional component, particularly in the horizontal direction and/or upwards, away from the rotation axis of the helical conveyor (3), through which tube (6) the solids are forced by the pressure of the conveying actions (8, 10) in the opposite direction.

13. Use of the separator according to one of claims 1 to 12:
a) in a solid/liquid separating device (30) which removes solids from a solid/liquid mixture (33), particularly in a squeezing and discharge section (34) of a separating device (30) of this kind, for removing any liquid still present in the removed solids, and/or
b) for dewatering solids removed from waste water.

## Revendications

1. Dispositif de séparation pour séparer un liquide (18) à partir de matières solides (31), notamment pour séparer un liquide (18) d'un produit de séparation qui préalablement a été éliminé d'un mélange matière solide/liquide (33), comprenant :
- un dispositif de transport à vis (1) muni d'un carter (2), d'un arbre (4) et d'une hélice de transport (3),
- une zone de compactage (15) dans laquelle est comprimée une matière solide transportée par le dispositif de transport à vis (1) pour presser du liquide (18),
- une surface criblante (16), notamment sur la zone de compactage (15), et
- un segment d'éjection de matière solide (7) au niveau duquel de la matière solide pressée (17) est évacuée par l'axe rotatif du dispositif de transport à vis (1),
**caractérisé par**
un dispositif de transport antagoniste (9) entraîné par moteur agissant à l'encontre de l'hélice de transport (3), au moyen duquel la matière solide peut être transportée, entraînée par moteur, dans une direction opposée (10) du moins avec une composante de direction opposée à la direction de transport (8) de l'hélice de transport (3), de telle sorte que la matière solide (17) se trouvant dans la zone de compactage (15) et/ou au niveau du segment d'éjection de matière solide (7) est mise sous pression par le transport de l'hélice de transport (3) et le transport opposé (10), afin d'augmenter ainsi les forces de pression pour presser du liquide ou les forces d'éjection (P) pour éjecter de la matière solide pressée (24) hors du dispositif de séparation.

2. Dispositif de séparation selon la revendication 1,
**caractérisé en ce que**
le dispositif de transport antagoniste (9) présente au moins une première surface de transport hélicoïdale (12) rotative.

3. Dispositif de séparation selon la revendication 2,
**caractérisé en ce qu'**
au moins une première surface de transport hélicoïdale (12) est spiralée dans le sens opposé à l'hélice de transport (3).

4. Dispositif de séparation selon l'une quelconque des revendications 2 ou 3,
**caractérisé en ce que**
le dispositif de transport antagoniste (9) présente au moins un élément de transport antagoniste (11, 19) sous la forme d'une spire de vis ou d'une pale d'hélice, relié pour la rotation conjointe à l'arbre (4) du dispositif de transport à vis (1) s'étendant dans la direction de transport (8) du dispositif de transport à vis (1) au-delà de l'hélice de transport (3), ou à un arbre propre au dispositif de transport antagoniste (9) et disposé de préférence de façon concentrique par rapport au premier, sur lequel est formé la première surface de transport hélicoïdale (12).

5. Dispositif de séparation selon l'une quelconque des revendications 1 à 4,
**caractérisé en ce que**
l'hélice de transport (3) est rotative à l'encontre du sens de rotation de transport (F) dans un but de nettoyage et/ou pour ramener de la matière solide dans une zone située au début du trajet de transport de l'hélice de transport, et
au dispositif de transport antagoniste (9) est associé un élément de transport (20, 21), qui lors d'une rotation de l'hélice de transport (3) à l'encontre du sens de rotation de transport (F), transporte, notamment ramène, dans la direction vers la zone de compactage (15) et/ou vers le segment d'éjection de matière solide (7), de la matière solide se trouvant, vue dans la direction de transport (8), au-delà de la zone de compactage (15) et/ou du segment d'éjection de matière solide (7).

6. Dispositif de séparation selon la revendication 5, en particulier également selon la revendication 4,
**caractérisé en ce que**
le dispositif de transport antagoniste (9) présente un dispositif de transport axial qui pour la rotation conjointe est relié à l'arbre (4) du dispositif de transport à vis (1), configuré de préférence comme un tel dispositif de transport axial, et
le dispositif de transport axial, outre un élément de transport antagoniste (11, 12) configuré en sens inverse de l'hélice de transport (3) de manière à transporter de la matière solide (10) dans la direction de transport opposée (10) lors d'une rotation de l'arbre (4) dans le sens de rotation de transport, présente également l'élément de transport (20, 21) configuré comme un élément de transport axial (20) dans le même sens que l'hélice de transport (3) - notamment sous la forme d'une spire de vis ou d'une pale d'hélice et muni d'une deuxième surface de transport hélicoïdale (21) spiralée dans le même sens que l'hélice de transport (3).

7. Dispositif de séparation selon l'une quelconque des revendications 2 à 4 et/ou la revendication 6,
**caractérisé en ce que**
la hauteur de flanc ou hauteur de vissage d'une, de plusieurs ou de toutes les surfaces de transport hélicoïdales (2) est constante ou se réduit vue dans la direction de transport opposée (10).

8. Dispositif de séparation selon l'une quelconque des revendications 1 à 7,
**caractérisé en ce que**
l'hélice de transport (3), vue dans la direction de transport (8), se termine en amont du segment d'éjection de matière solide (7) et/ou
le dispositif de transport antagoniste (9), vu dans la direction de transport (8), est disposé en aval du segment d'éjection de matière solide (7), pour que de la matière solide qui se trouve, vue dans la direction de transport (8), au-delà de la zone de compactage (15) et/ou du segment d'éjection de matière solide (7), soit transportée en contresens ou ramenée vers la zone de compactage (15) et/ou le segment d'éjection de matière solide (7).

9. Dispositif de séparation selon l'une quelconque des revendications précédentes,
**caractérisé en ce que**
l'arbre (4) est muni de la surface criblante (16) ou au moins une partie de la surface criblante (16) est formée sur l'arbre (4).

10. Dispositif de séparation selon l'une quelconque des revendications 1 à 9,
**caractérisé en ce que**
l'arbre (4) présente la forme d'un arbre creux avec des ouvertures de criblage (13) et notamment d'un tube (14) ouvert au niveau d'une extrémité inférieure.

11. Dispositif de séparation selon la revendication 10,
**caractérisé en ce que**
les ouvertures de criblage (13) sont formées dans toute la zone ou dans une zone partielle de la zone de compactage (15) sur l'arbre (4), mais de préférence pas dans la zone du segment d'éjection de matière solide (7).

12. Dispositif de séparation selon l'une quelconque des revendications 1 à 11,
**caractérisé en ce que**
le segment d'éjection de matière solide (7) présente un tube d'éjection (6) s'étendant avec une composante de direction tangentielle ou radiale, notamment dans la direction horizontale et/ou vers le haut, depuis l'axe de rotation de l'hélice de transport (3), à travers lequel la matière solide est pressée en raison de la pression des transports en sens opposés (8, 10).

13. Utilisation du dispositif de séparation selon l'une quelconque des revendications 1 à 12 :
a) dans un dispositif de séparation de matière solide/liquide (30) qui élimine de la matière solide d'un mélange matière solide/liquide (33), notamment dans une zone de compression et d'éjection (34) d'un tel dispositif de séparation (30), pour extraire du liquide encore présent dans la matière solide éliminée, et/ou
b) pour drainer des matières solides éliminées d'eaux usées.
